# EUROPÄISCHE PATENTANMELDUNG

(11) **EP 0 866 546 A2**
(43) Veröffentlichungstag der Anmeldung: **23.09.1998**
(21) Anmeldenummer: 98104366.4
(22) Anmeldetag: 11.03.1998
(51) Int. Cl.: H02M 7/10, H02M 7/155, H02M 7/217

(54) **Ansteuerung für einen an einem Wechselspannungsnetz mit zwei Netzstromanschlüssen betriebenen Gleichstrommotor**

(30) Priorität: 19.03.1997 DE 19711434
(71) Anmelder: Westfalia Werkzeugcompany Gesellschaft mit beschränkter Haftung, 58093 Hagen (DE)
(72) Erfinder: Klingbeil, Thomas, Dipl.-Ing., 46240 Bottrop (DE)
(74) Vertreter: Stark, Walter, Dr.-Ing.

(57) **Zusammenfassung**

Die Erfindung bezieht sich auf die Ansteuerung für einen an einem Wechselspannungsnetz mit zwei Netzstromanschlüssen (A, B) betriebenen Gleichstrommotor mit zwei Stromanschlußklemmen (C, D). Da sich die Netzspannung normalerweise nicht ändert und insofern einen festgelegten Oberwert nicht überschreitet, ist die Motorleistung hauptsächlich von der Größe des Motors und dessen Effizienz abhängig und kann allenfalls durch Phasenanschnitt- oder Vollwellensteuerung abgesenkt werden. Um die Motorleistung bei Betrieb an dem Wechselspannungsnetz über diesen Maximalwert hinaus zu steigern, soll eine Ansteuerung für einen an einem Wechselspannungsnetz mit zwei Netzstromanschlüssen (A, B) betriebenen Gleichstrommotor mit zwei Stromanschlußklemmen (C, D) geschaffen werden, die eine Spannungsüberhöhung erzeugt, durch die die Motorleistung angehoben wird.

## Beschreibung

Die Erfindung bezieht sich auf die Ansteuerung für einen an einem Wechselspannungsnetz mit zwei Netzstromanschlüssen (A, B) betriebenen Gleichstrommotor mit zwei Stromanschlußklemmen (C, D).

In der Praxis werden an einem Wechselspannungsnetz betriebene Gleichstrommotoren im allgemeinen in Staubsaugern, Haartrocknern, Bohrmaschinen, Kreissägen, Pumpen, Küchenmaschinen und vielen anderen Haushaltsgeräten und Werkzeugmaschinen eingesetzt. Die Leistung des jeweiligen Gerätes wird zum einen durch die Motorgröße und zum anderen durch die Betriebsspannung und die Stromstärke bestimmt. Die Gleichstrommotoren werden üblicherweise über eine Steckdose an das regionale Wechselspannungsnetz angeschlossen.

Da die Netzspannung im regionalen Wechselspannungsnetz im allgemeinen konstant ist und einen festgelegten Oberwert nicht überschreitet, ist die bei der verfügbaren Netzspannung erzielbare Motorleistung hauptsächlich von der Größe des Motors und dessen Effizienz abhängig und kann allenfalls durch Phasenanschnitt- oder Vollwellensteuerung abgesenkt werden. Insofern sind die möglichen Baugrößen der bei den jeweiligen Geräten einsetzbaren Motoren durch die räumlichen Einbaubedingungen limitiert und die zur Verfügung stehende Motorleistung auf diese Weise ebenfalls.

Aus der Funktechnik ist die Möglichkeit, eine Verbraucher, wie z. B. eine "Röhre" mit einer höheren Effektivspannung als der im regionalen Wechselspannungsnetz verfügbaren Netzspannung zu versorgen, bekannt. Hierfür geeignete Schaltungen, die aus einer Wechselspannung eine vom Betrag her höhere Gleichspannung auch ohne Transformator oder Drosseln erzeugen, sind in der Literatur als DELON- oder GREINACHER-Verdopplerschaltung beschrieben und bestehen aus zwei Dioden und zwei Kondensatoren. Hierbei sind jeweils ein Kondensator und eine Diode in Reihe geschaltet und mit dem anderen Kondensator und der anderen Diode parallel geschaltet, wobei die Dioden unterschiedlich ausgerichtet sind und jeweils zwischen Diode und entsprechendem Kondensator eine Stromanschlußklemme für den Verbraucher vorgesehen ist.

Die DELON-Schaltung zeichnet sich gegenüber anderen Schaltungen dadurch aus, daß eine relativ große Spannungsüberhöhung erzeugt wird und dabei die Wechselstrombelastungen der in der Schaltung enthaltenen Kondensatoren relativ gering bleibt.

Nachteilig hierbei ist jedoch, daß während des Ladens des Kondensators ein starker Stromanstieg erfolgt und sich der Kondensator bereits während der Halbwelle, innerhalb derer er geladen worden ist, zumindest teilweise wieder entlädt. Hierdurch wird der Netzstrom für einen großen Teil dieser Halbwelle zu Null, woraus starke Oberwellen im Netzstrom resultieren, die verschiedene Nachteile haben. Zum einen beeinflussen sie sowohl das regionale Wechselspannungsnetz selbst als auch der Spannungsverdopplungsschaltung vorgeschaltete Schaltelemente negativ und zum anderen wirken sie sich nachteilig auf den Betrieb des regionalen Wechselspannungsnetzes aus.

Die negativen Auswirkungen auf die der Spannungsverdopplungsschaltung vorgeschalteten Schaltelemente werden durch von den Oberwellen erzeugte hohe Spitzenströme verursacht, welche die Schaltelemente wie z. B. Netzschalter, Netzleitung, Netzstecker oder interne Stromleitungen besonders belasten.

Im regionalen Wechselspannungsnetz und auch in den der Spannungsverdopplungsschaltung vorgeschalteten Schaltelementen produzieren die Oberwellen lediglich Blindleistung, für die jedoch das Wechselspannungsnetz bzw. die Schaltelemente entsprechend belastbar ausgelegt und insofern größer, als es für die entnommene Wirkleistung eigentlich erforderlich wäre, dimensioniert sein müssen.

Weiterhin werden durch höherfrequente Oberwellen auch eventuelle über das Spannungsnetz erfolgende Datenübertragungen, wie sie z. B. bei einem Babyphone, einer Haussprechanlage oder dergleichen erfolgen, gestört. Dies ist auch insofern kritisch, da haushaltsübergreifende Anwendungen betreffend Telekommunikation bzw. Datenfernübertragung in Zukunft in wachsendem Umfang Anwendung finden werden und insofern Störungen des Wechselspannungsnetzes vermieden werden müssen.

Aufgabe der Erfindung ist es eine Ansteuerung für einen an einem Wechselspannungsnetz mit zwei Netzstromanschlüssen (A, B) betriebenen Gleichstrommotor mit zwei Stromanschlußklemmen (C, D) zu schaffen, welche die Motorleistung bei Betrieb an dem Wechselspannungsnetz steigert und eine Mehrbelastung sowie Störungen des Netzes vermeidet.

Diese Aufgabe wird gelöst durch eine Ansteuerung für einen an einem Wechselspannungsnetz mit zwei Netzstromanschlüssen (A, B) betriebenen Gleichstrommotor mit zwei Stromanschlußklemmen (C, D) mit folgenden Merkmalen:
1) die Stromanschlußklemme (D) ist über zumindest eine Diode (D1) mit dem Netzstromanschluß (B) verbunden, wobei die Diode (D1) anodenseitig mit dem Netzstromanschluß (B) und kathodenseitig mit der Stromanschlußklemme (D) verbunden ist,
2) die Stromanschlußklemme (C) ist über zumindest eine Diode (D2) mit dem Netzstromanschluß (B) verbunden, wobei die Diode (D2) anodenseitig mit der Stromanschlußklemme (C) und kathodenseitig mit dem Netzstromanschluß (B) verbunden ist,
3) die Stromanschlußklemme (C) ist über zumindest eine Diode (D4) mit dem Netzstromanschluß (A) verbunden, wobei die Diode (D4) anodenseitig mit der Stromanschlußklemme (C) und kathodenseitig mit dem Netzstromanschluß (A) verbunden ist,
4) die Stromanschlußklemme (D) ist über zumindest eine Diode (D3) mit dem Netzstromanschluß (A) verbunden, wobei die Diode (D3) anodenseitig mit dem Netzstromanschluß (A) und kathodenseitig mit der Stromanschlußklemme (D) verbunden ist,
5) der Stromanschlußklemme (C) ist eine die Entladung eines Kondensators steuernde Steuerschaltung (S1) zugeordnet, die wenigstens einen ersten steuerschaltungsanschluß (E) und einen zweiten Steuerschaltungsanschluß (G) aufweist,
6) der Steuerschaltungsanschluß (E) ist mit der Stromanschlußklemme (C) verbunden,
7) der Steuerschaltungsanschluß (G) ist über zumindest einen Kondensator (C2), insbesondere Elektrolytkondensator (EC2) mit dem Netzstromanschluß (A) verbunden, wobei der Steuerschaltungsanschluß (G) mit einem Anschluß des Kondensators (C2) bzw. dem negativen Anschluß des Elektrolytkondensators (EC2) verbunden ist,
8) der Stromanschlußklemme (D) ist eine die Entladung eines Kondensators steuernde Steuerschaltung (S2) zugeordnet, die wenigstens einen ersten Steuerschaltungsanschluß (F) und einen zweiten Steuerschaltungsanschluß (H) aufweist,
9) der Steuerschaltungsanschluß (H) ist mit der Stromanschlußklemme (D) verbunden und
10) der Steuerschaltungsanschluß (F) ist über zumindest einen Kondensator (C1), insbesondere Elektrolytkondensator (EC1) mit dem Netzstromanschluß (A) verbunden, wobei der Steuerschaltungsanschluß (F) mit einem Anschluß des Kondensators (C1) bzw. dem positiven Anschluß des Elektrolytkondensators (EC1) verbunden ist.

Hierdurch wird eine Spannungsüberhöhung erzeugt, durch die die Motorleistung angehoben wird, wobei die Steuerschaltungen (S1, S2) bei entsprechend definierten Phasenwinkeln so öffnen bzw. schließen, daß sich der Stromfluß aus dem Wechselspannungsnetz und aus der Entladung der Kondensatoren (C1, C2) zu einem nahezu kontinuierlichen Stromfluß ergänzen. Insofern wird auch ein starker Stromanstieg vermieden und der Stromspitzenwert wird abgesenkt, so daß die Kondensatoren weniger belastet werden und kleiner dimensioniert sein können. Weiter werden die Oberwellen bzw. deren Amplitude deutlich reduziert, so daß Mehrfachverluste und eine zusätzliche Netzbelastung sowie ein Störeinfluß auf das Wechselspannungsnetz vermieden werden.

Auch der Leistungsfaktor des Motors wird besser, da der Wechselspannungsanteil, und somit auch die Blechverluste, reduziert worden ist.

Die Kondensatoren können im Vergleich zu einer herkömmlichen DELON-Schaltung bei gleichen Leistungsdaten weniger als die Hälfte der Kapazität aufweisen, wodurch sowohl die Baugröße als auch der Kostenaufwand für die Kondensatoren deutlich reduziert werden kann.

Erfindungsgemäß können die Steuerschaltungen (S1, S2) jeweils folgende weitere Merkmale aufweisen:
11) zwischen erstem Steuerschaltungsanschluß (E, F) und zweitem Steuerschaltungsanschluß (G ,H) ist jeweils ein einem Kondensator (C3, C4) in Reihe vorgeschalteter Widerstand (R5, R6) vorgesehen,
12) zwischen erstem Steuerschaltungsanschluß (E, F) und zweitem Steuerschaltungsanschluß (G, H) ist jeweils parallel zu dem entsprechenden Kondensator (C3, C4) und Widerstand (R5, R6) ein Thyristor (THY1, THY2) angeordnet, dessen Anode mit dem entsprechenden ersten Steuerschaltungsanschluß (E, F) verbunden ist, dessen Kathode mit dem entsprechenden zweiten Steuerschaltungsanschluß (G, H) verbunden ist und dessen Gate mit dem Verbindungspunkt zwischen dem entsprechenden Kondensator (C3, C4) und dem entsprechenden Widerstand (R5, R6) verbunden ist,
13) zwischen erstem Steuerschaltungsanschluß (E, F) und zweitem Steuerschaltungsanschluß (G, H) ist jeweils parallel zu dem entsprechenden Kondensator (C3, C4) und Widerstand (R5, R6) ein einer Diode (D5, D6) vorgeschalteter Widerstand (R2, R1) vorgesehen, wobei die Kathode der Diode (D5, D6) mit dem entsprechenden Steuerschaltungsanschluß (E, F) und die Anode der Diode (D5, D6) mit dem entsprechenden Widerstand (R1, R2) verbunden ist.

Durch den Widerstand (R1, R2) wird der Einschaltstrom begrenzt und die Stromanstiegsgeschwindigkeit im Betrieb beschränkt, um zum einen die Belastung der Diode (D5, D6) beim Einschalten zu verringern und zum anderen die Amplituden der Oberwellen des Netzstromes zu beschränken.

Erfindungsgemäß können die Thyristoren (THY1, THY2) jeweils über eine Z-Diode (D11, D12) mit dem jeweiligen Verbindungspunkt zwischen dem entsprechenden Kondensator (C3, C4) und dem entsprechenden Widerstand (R5, R6) verbunden sein, wobei die Z-Dioden (D11, D12) jeweils anodenseitig mit dem Gate des entsprechenden Thyristors (THY1, THY2) verbunden ist. Hierdurch wird die Zündschwelle des Thyristors (THY1, THY2) erhöht und insofern die Auswirkung von Bauteiltoleranzen in Bezug auf die Zündspannung des Thyristors (THY1, THY2) verringert.

Weiter können die Steuerschaltungen (S1, S2) jeweils eine Diode (D9, D10) aufweisen, deren Anode mit dem entsprechenden ersten Steuerschaltungsanschluß (E, F) und deren Kathode mit dem Verbindungspunkt zwischen der Anode des entsprechenden Thyristors (THY1, THY2) und dem entsprechenden Widerstand (R5, R6) verbunden ist. Hierdurch wird der Thyristor (THY1, THY2) geschützt, da verhindert wird, daß das Gate gegenüber der Kathode zu stark negativ vorgespannt wird.

Bei einer bevorzugten Ausführung der Erfindung können die Steuerschaltungen (S1, S2) jeweils eine dem entsprechenden Widerstand (R5, R6) parallel geschaltete Diode (D7, D8) aufweisen, die kathodenseitig mit der Anode des entsprechenden Thyristors (THY1, THY2) und anodenseitig mit der Kathode der entsprechenden Z-Diode (D11, D12) verbunden ist. Somit wird der Kondensator (C3, C4) nach jedem Zünden des entsprechenden Thyristors (THY1, THY2) sicher nahezu vollständig entladen.

Ferner kann jeweils zwischen dem Steuerschaltungsanschluß (G, H) und der Verbindung zwischen dem Gate des Thyristors (THY1, THY2) und der Anode der Z-Diode (D11, D12) jeweils ein Widerstand (R3, R4) angeordnet sein, so daß eine Selbstzündung des Thyristors (THY1, THY2) verhindert wird, indem Ladungsträger am Gate des Thyristors (THY1, THY2) abfließen können.

Bei einem weiteren Ausführungsbeispiel kann den Steuerschaltungen (S1, S2) jeweils eine Diode (D5, D6) parallel geschaltet sein, wobei jeweils die Anode der Diode (D5, D6) mit dem jeweiligen ersten Steuerschaltungsanschluß (E, F) und die Kathode der Diode (D5, D6) mit dem jeweiligen zweiten Steuerschaltungsanschluß (G, H) verbunden ist, so daß unabhängig von dem Aufbau und dem Schaltzustand der Steuerschaltungen (S1, S2) der jeweilige Kondensator (C1, C2) bzw. der Elektrolytkondensator (EC1, EC2) geladen werden kann.

Dabei kann jeweils zwischen den Kathoden der Dioden (D5, D6) und dem zweiten Steuerschaltungsanschluß (G, H) ein Widerstand (R1, R2) angeordnet sein, so daß zum einen die Belastung der Dioden (D5, D6) beim Einschalten verringert wird und zum anderen die Amplituden der Oberwellen des Netzstromes beschränkt werden.

Ein bevorzugtes Ausführungsbeispiel einer erfindungsgemäßen Ansteuerung kann gekennzeichnet sein durch folgende Merkmale:
14) zwischen erstem Steuerschaltungsanschluß (E, F) und zweitem Steuerschaltungsanschluß (G ,H) ist jeweils ein einem Kondensator (C3, C4) in Reihe vorgeschalteter Widerstand (R5, R6) vorgesehen und
15) zwischen erstem Steuerschaltungsanschluß (E, F) und zweitem Steuerschaltungsanschluß (G, H) ist jeweils parallel zu dem entsprechenden Kondensator (C3, C4) und Widerstand (R5, R6) ein Thyristor (THY1, THY2) angeordnet, dessen Anode mit dem entsprechenden ersten Steuerschaltungsanschluß (E, F) verbunden ist, dessen Kathode mit dem entsprechenden zweiten Steuerschaltungsanschluß (G, H) verbunden ist und dessen Gate mit dem Verbindungspunkt zwischen dem entsprechenden Kondensator (C3, C4) und dem entsprechenden Widerstand (R5, R6) verbunden ist.

Vorzugsweise können die Thyristoren (THY1, THY2) jeweils über eine Z-Diode (D11, D12) mit dem jeweiligen Verbindungspunkt zwischen dem entsprechenden Kondensator (C3, C4) und dem entsprechenden Widerstand (R5, R6) verbunden sein, wobei die Z-Diode (D11, D12) jeweils anodenseitig mit dem Gate des entsprechenden Thyristors (THY1, THY2) verbunden sind, so daß die Zündschwelle des Thyristors (THY1, THY2) erhöht wird. Hierdurch wird die Auswirkung von Bauteiltoleranzen in bezug auf die Zündspannung des Thyristors (THY1, THY2) verringert.

Erfindungsgemäß können die Steuerschaltungen (S1, S2) jeweils eine Diode (D9, D10) aufweisen, deren Anode mit dem entsprechenden ersten Steuerschaltungsanschluß (E, F) und deren Kathode mit dem Verbindungspunkt zwischen der Anode des entsprechenden Thyristors (THY1, THY2) und dem entsprechenden Widerstand (R5, R6) verbunden ist, so daß eine starke negative Vorspannung des Gates gegenüber der Kathode zum Schutz des Thyristors (THY1, THY2) verhindert wird.

Vorteilhafterweise können die Steuerschaltungen (S1, S2) jeweils eine dem entsprechenden Widerstand (R5, R6) parallel geschaltete Diode (D7, D8) aufweisen, die kathodenseitig mit der Anode des entsprechenden Thyristors (THY1, THY2) und anodenseitig mit der Kathode der entsprechenden Z-Diode (D11, D12) verbunden ist, so daß die Kondensatoren (C3, C4) nach jedem Zünden des entsprechenden Thyristors (THY1, THY2) sicher nahezu vollständig entladen werden.

Weiter kann jeweils zwischen dem Steuerschaltungsanschluß (G, H) und der Verbindung zwischen dem Gate des Thyristors (THY1, THY2) und der Anode der Z-Diode (D11, D12) jeweils ein Widerstand (R3, R4) angeordnet sein, so daß eine Selbstzündung eines Thyristors (THY1, THY2) verhindert wird, in dem Ladungsträger am Gate des Thyristors (THY1, THY2) abfließen können.

Ein bevorzugtes Ausführungsbeispiel einer erfindungsgemäßen Ansteuerung kann gekennzeichnet sein durch die Kombination folgender Merkmale:
16) zwischen Kondensator (C1) bzw. Elektrolytkondensator (EC1) und Netzstromanschluß (A) ist ein mit einer Diode (D11) in Reihe geschalteter Kondensator (C5), insbesondere Elektrolytkondensator (EC5) vorgesehen, wobei die Diode (D11) anodenseitig mit dem Kondensator (C1) bzw. dem negativen Anschluß des Elektrolytkondensators (EC1) verbunden ist und der freie Anschluß des Kondensators (C5) bzw. der negative Anschluß des Elektrolytkondensators (EC5) an dem Netzstromanschluß (A) angeschlossen ist,
17) es ist eine Diode (D13) vorgesehen, die anodenseitig mit der Verbindung (P) zwischen der Kathode der Diode (D11) und dem Kondensator (C5) bzw. dem positiven Anschluß des Elektrolytkondensators (EC5) und kathodenseitig mit dem ersten Steuerschaltungsanschluß (F) verbunden ist,
18) es ist eine Diode (D15) vorgesehen, die anodenseitig mit dem Netzstromanschluß (A) und kathodenseitig mit der Verbindung (J) zwischen der Anode der Diode (D11) und dem Kondensator (C1) bzw. dem negativen Anschluß des Elektrolytkondensators (EC1) verbunden ist,
19) zwischen dem Kondensator (C2) bzw. dem negativen Anschluß des Elektrolytkondensators (EC2) und der Stromanschlußklemme (C) ist ein mit einer Diode (D12) in Reihe geschalteter Kondensator (C6), insbesondere Elektrolytkondensator (EC6) vorgesehen, wobei die Diode (D12) anodenseitig mit dem Kondensator (C2) bzw. dem negativen Anschluß des Elektrolytkondensators (EC2) verbunden ist und der freie Anschluß des Kondensators (C6) bzw. der negative Anschluß des Elektrolytkondensators (EC6) an die Stromanschlußklemme (C) angeschlossen ist,
20) es ist eine Diode (D14) vorgesehen, die anodenseitig mit der Verbindung (O) zwischen der Kathode der Diode (D12) und dem Kondensator (C6) bzw. dem positiven Anschluß des Elektrolytkondensators (EC6) und kathodenseitig mit dem ersten Steuerschaltungsanschluß (E) verbunden ist, und
21) es ist eine Diode (D16) vorgesehen, die anodenseitig mit der Stromanschlußklemme (C) und kathodenseitig mit der Verbindung (I) zwischen der Anode der Diode (D12) und dem Kondensator (C2) bzw. dem negativen Anschluß des Elektrolytkondensators (EC2) verbunden ist.

Hierdurch wird eine zweite Leistungsstufe geschaffen, so daß eine geringere, aber länger anhaltende Spannungsüberhöhung erreicht wird, wodurch ein geringerer Wechselspannungsanteil resultiert, und insofern auch die Blechverluste im Motor reduziert werden und das Blechpaket im Motor weniger belastet wird. Dementsprechend wird die Effektivität des Motors gesteigert. Weiterhin wird durch die Verteilung des Energieumsatzes auf mehrere Kondensatoren die Belastung des einzelnen Kondensators verringert, wodurch die Kondensatoren eine kleiner Bauform aufweisen können, was die Kosten wiederum senkt.

Vorzugsweise kann pro Steuerschaltung jeweils zumindest eine weitere Leistungsstufe vorgesehen sein, wobei jede Leistungsstufe durch die Kombination folgender Merkmale gekennzeichnet ist:
22) die Leistungsstufe besteht zumindest aus drei Dioden und einem Kondensator bzw. einem Elektrolytkondensator,
23) der Kondensator bzw. der Elektrolytkondensator und die erste Diode sind in Reihe zwischen den Kondensator der vorherigen Leistungsstufe und dem Netzstromanschluß (A) bzw. der Stromanschlußklemme (C) zwischengeschaltet, wobei die Anode der ersten Diode mit dem Kondensator bzw. dem negativen Anschluß des Elektrolytkondensators der vorherigen Leistungsstufe verbunden ist und der freie Anschluß des Kondensators bzw. der negative Anschluß des Elektrolytkondensators mit dem Netzstromanschluß (A) bzw. der Stromanschlußklemme (C) verbunden ist,
24) jeweils an der Verbindung (M, N) zwischen der Anode der ersten Diode und dem Kondensator bzw. der vorherigen Leistungsstufe ist die Kathode der zweiten Diode angeschlossen, deren Anode mit dem Netzstromanschluß (A) bzw. der Stromanschlußklemme (C) verbunden ist,
25) die dritte Diode ist kathodenseitig mit dem ersten Steuerschaltungsanschluß (E, F) verbunden und anodenseitig an die Verbindung (K, L) zwischen der Kathode der ersten Diode und dem Kondensator bzw. dem positiven Anschluß des Elektrolytkondensators der vorherigen Leistungsstufe angeschlossen.

Auf diese Weise ist die Schaltung beliebig kaskadierbar und kann an unterschiedlichste Anforderungen flexibel angepaßt werden.

Erfindungsgemäß können die Steuerschaltungen (S1, S2) auch MOSFet's und/oder Bipolartransistoren aufweisen, so daß eine beliebige Steuerung der Entladevorgänge der Kondensatoren (C3, C4) möglich ist.

Auch können die Steuerschaltungen (S1, S2) IGBT's (Insulated Gate Bipolar Transistors) aufweisen, die zum einen höhere Spannungen sperren und trotzdem hohe Ströme schalten können und zum anderen nur geringe Steuerleistungen benötigen. Auch hier ist eine flexible Steuerung der Entladevorgänge der Kondensatoren (C3, C4) gegeben.

Ferner können die Steuerschaltungen (S1, S2) Triac's aufweisen.

Im folgenden wird ein in der Zeichnung dargestelltes Ausführungsbeispiel der Erfindung erläutert. Es zeigen:
- Fig. 1: ein erstes Ausführungsbeispiel einer erfindungsgemäßen Ansteuerung mit stilisiert dargestellten Steuerschaltungen (S1, S2),
- Fig. 2: ein zweites Ausführungsbeispiel einer erfindungsgemäßen Ansteuerung mit detailliert dargestellten Steuerschaltungen (S1, S2),
- Fig. 3: ein drittes Ausführungsbeispiel einer erfindungsgemäßen einfach kaskadierten Ansteuerung mit stilisiert dargestellten Steuerschaltungen (S1, S2),
- Fig. 4: ein viertes Ausführungsbeispiel einer erfindungsgemäßen zweifach kaskadierten Ansteuerung mit stilisiert dargestellten Steuerschaltungen (S1, S2) und
- Fig. 5: ein fünftes Ausführungsbeispiel einer erfindungsgemäßen Ansteuerung mit detailliert dargestellten Steuerschaltungen (S1, S2),

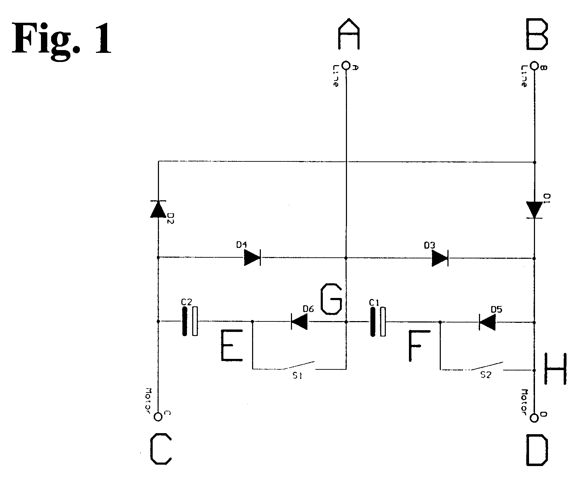

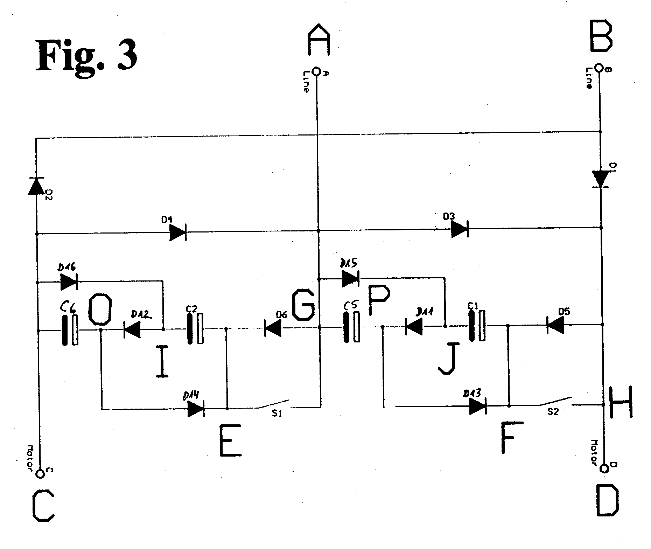

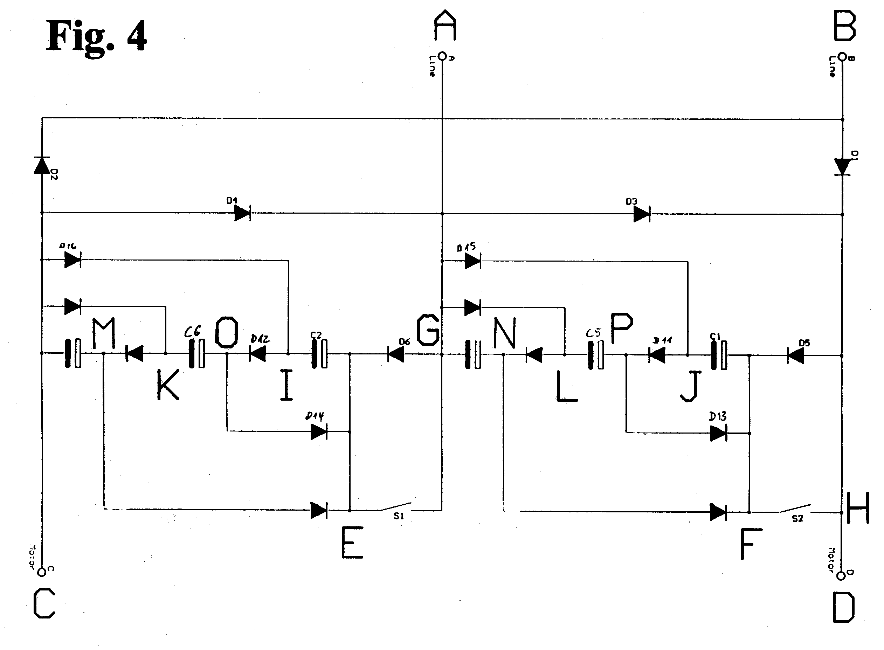

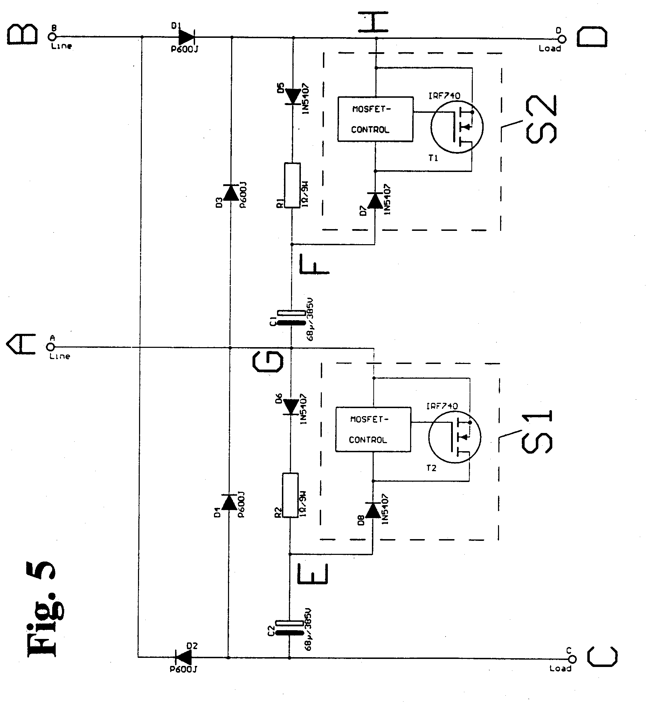

Die Figuren 1 bis 5 zeigen verschiedene Ausführungsbeispiele einer erfindungsgemäßen Ansteuerung für einen an einem Wechselspannungsnetz mit zwei Netzstromanschlüssen (A, B) betriebenen, in der Zeichnung jedoch nicht dargestellten Gleichstrommotor mit zwei Stromanschlußklemmen (C, D). Die verschiedenen dargestellten Ausführungsbeispiele unterscheiden sich im wesentlichen durch unterschiedlichen Aufbau der Steuerschaltungen (S1, S2) oder das Vorhandensein bzw. den Ausbau einer eventuellen Kaskadierung. Für gleiche oder identische Teile sind in allen Figuren einheitliche Bezugszeichen verwendet worden.

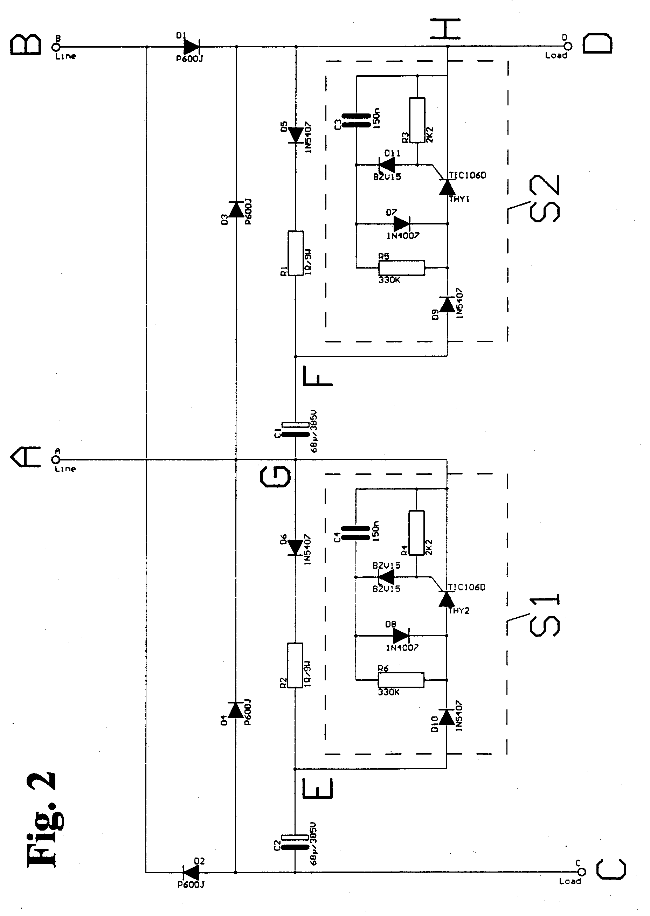

Fig. 2 zeigt einen Schaltplan einer erfindungsgemäßen Ansteuerung, wobei das Wechselspannungsnetz und der Gleichstrommotor nicht dargestellt sind, sondern jeweils durch die Netzstromanschlüsse (A, B) und die Stromanschlußklemmen (C, D) des Gleichstrommotors symbolisiert werden.

Die Stromanschlußklemme (D) ist über eine Diode (D1) mit dem Netzstromanschluß (B) verbunden, wobei die Diode (D1) anodenseitig mit dem Netzstromanschluß (B) und kathodenseitig mit der Stromanschlußklemme (D) verbunden ist. Die Stromanschlußklemme (C) ist über eine Diode (D2) ebenfalls mit dem Netzstromanschluß (B) verbunden, wobei die Diode (D2) anodenseitig mit der Stromanschlußklemme (C) und kathodenseitig mit dem Netzstromanschluß (B) verbunden ist.

Die Stromanschlußklemme (C) ist über eine Diode (D4) mit dem Netzstromanschluß (A) verbunden, wobei die Diode (D4) anodenseitig mit der Stromanschlußklemme (C) und kathodenseitig mit dem Netzstromanschluß (A) verbunden ist. Die Stromanschlußklemme (D) ist über eine Diode (D3) ebenfalls mit dem Netzstromanschluß (A) verbunden, wobei die Diode (D3) anodenseitig mit dem Netzstromanschluß (A) und kathodenseitig sowohl mit der Stromanschlußklemme (D) als auch mit der Kathode der Diode (D1) verbunden ist.

Weiter ist die Stromanschlußklemme (C) über eine Steuerschaltung (S1) mit einem ersten Steuerschaltungsanschluß (E) und einem zweiten Steuerschaltungsanschluß (G) mit dem negativen Anschluß eines Elektrolytkondensators (EC2) verbunden. Der positive Anschluß des Elektrolytkondensators (EC2) ist mit dem Netzstromanschluß (A) verbunden.

Bei der Steuerschaltung (S1) ist zwischen dem Steuerschaltungsanschluß (E) und dem Steuerschaltungsanschluß (G) ein einer Diode (D6) in Reihe nachgeschalteter Widerstand (R2) vorgesehen, wobei die Kathode der Diode (D6) mit dem Steuerschaltungsanschluß (E) und die Anode der Diode (D6) mit dem Widerstand (R2) verbunden ist. Parallel dazu ist zwischen dem Steuerschaltungsanschluß (E) und dem Steuerschaltungsanschluß (G) ein einer Diode (D10) in Reihe nachgeschalteter und einem Kondensator (C4) in Reihe vorgeschalteter Widerstand (R6) vorgesehen, wobei die Kathode der Diode (D10) mit dem Widerstand (R6) und die Anode der Diode (D10) mit dem Steuerschaltungsanschluß (E) verbunden ist. Zwischen dem Verbindungspunkt zwischen der Kathode der Diode (D10) und dem Widerstand (R6) und dem Steuerschaltungsanschluß (G) ist ein Thyristor (THY2) angeordnet, dessen Anode mit dem Verbindungspunkt zwischen der Kathode der Diode (D10) und dem Widerstand (R6) verbunden ist, dessen Kathode mit dem Steuerschaltungsanschluß (G) verbunden ist und dessen Gate mit der Anode einer Z-Diode (D12) und einem Widerstand (R4), der andererseits wieder an den Steuerschaltungsanschluß (G) angeschlossen ist, verbunden ist. Dem Widerstand (R6) ist eine Diode (D8) parallel geschaltet, deren Kathode ebenfalls mit der Kathode der Diode (D10) verbunden ist. Die Kathode der Z-Diode (D12) ist mit der Anode der Diode (D8) verbunden.

Weiter ist die Stromanschlußklemme (D) über eine Steuerschaltung (S2) mit einem ersten Steuerschaltungsanschluß (F) und einem zweiten Steuerschaltungsanschluß (H) mit dem positiven Anschluß eines Elektrolytkondensators (EC1) verbunden. Der negative Anschluß des Elektrolytkondensators (EC1) ist mit dem Netzstromanschluß (A) verbunden.

Bei der Steuerschaltung (S2) ist zwischen dem Steuerschaltungsanschluß (F) und dem Steuerschaltungsanschluß (H) ein einer Diode (D5) in Reihe nachgeschalteter Widerstand (R1) vorgesehen, wobei die Kathode der Diode (D5) mit dem Steuerschaltungsanschluß (F) und die Anode der Diode (D5) mit dem Widerstand (R1) verbunden ist. Parallel dazu ist zwischen dem Steuerschaltungsanschluß (F) und dem Steuerschaltungsanschluß (H) ein einer Diode (D9) in Reihe nachgeschalteter und einem Kondensator (C3) in Reihe vorgeschalteter Widerstand (R5) vorgesehen, wobei die Kathode der Diode (D9) mit dem Widerstand (R5) und die Anode der Diode (D9) mit dem Steuerschaltungsanschluß (F) verbunden ist. Zwischen dem Verbindungspunkt zwischen der Kathode der Diode (D9) und dem Widerstand (R5) und dem Steuerschaltungsanschluß (H) ist ein Thyristor (THY1) angeordnet, dessen Anode mit dem Verbindungspunkt zwischen der Kathode der Diode (D9) und dem Widerstand (R5) verbunden ist, dessen Kathode mit dem Steuerschaltungsanschluß (H) verbunden ist und dessen Gate mit der Anode einer Z-Diode (D11) und einem Widerstand (R3), der andererseits wieder an den Steuerschaltungsanschluß (H) angeschlossen ist, verbunden ist. Dem Widerstand (R5) ist eine Diode (D7) parallel geschaltet, deren Kathode ebenfalls mit der Kathode der Diode (D9) verbunden ist. Die Kathode der Z-Diode (D11) ist mit der Anode der Diode (D7) verbunden.

Im folgenden wird die Funktionsweise der erfindungsgemäßen Ansteuerung gemäß Fig. 2 beschrieben, wobei als Ausgangspunkt der Elektrolytkondensator (EC1) ungeladen und der Elektrolytkondensator (EC2) negativ geladen sei.

An dem Netzstromanschluß (B) erscheint die positive Halbwelle der Wechselspannung und der Elektrolytkondensator (EC1) wird über den Stromfluß durch die Diode (D1), den Widerstand (R1) und die Diode (D5) positiv geladen. Parallel dazu wird der an dem Netzstromanschlußklemmen (C, D) angeschlossene Motor über die Diode (D1) mit Strom versorgt, der über die Diode (D4) abfließt.

Wenn der Ladestrom für den Elektrolytkondensator (EC1) sein Maximum erreicht, wird durch den Kondensator (C4) und den Widerstand (R6) verzögert der Thyristor (THY2) gezündet und der Elektrolytkondensator (EC2) ist dann über die Stromanschlußklemme (C) mit dem Motor verbunden. Die Spannung über dem Elektrolytkondensator (EC2) addiert sich zur Netzspannung und bewirkt somit eine Spannungsüberhöhung. Wenn der Elektrolytkondensator (EC2) entladen ist, sperrt der Thyristor (THY2) automatisch und der Motor ist ausschließlich über die Diode (D4) mit dem Netzstromanschluß (A) verbunden. Die positive Halbwelle ist nun zu Ende. Als Endpunkt ist jetzt der Elektrolytkondensator (EC1) positiv geladen und der Elektrolytkondensator (EC2) entladen.

Mit der nun mehr folgenden negativen Halbwelle an dem Netzstromanschluß (B) wiederholt sich der vorstehend beschriebene Vorgang mit umgekehrtem Vorzeichen.

## Patentansprüche

1. Ansteuerung für einen an einem Wechselspannungsnetz mit zwei Netzstromanschlüssen (A, B) betriebenen Gleichstrommotor mit zwei Stromanschlußklemmen (C, D) mit den folgenden Merkmalen:
1) die Stromanschlußklemme (D) ist über zumindest eine Diode (D1) mit dem Netzstromanschluß (B) verbunden, wobei die Diode (D1) anodenseitig mit dem Netzstromanschluß (B) und kathodenseitig mit der Stromanschlußklemme (D) verbunden ist,
2) die Stromanschlußklemme (C) ist über zumindest eine Diode (D2) mit dem Netzstromanschluß (B) verbunden, wobei die Diode (D2) anodenseitig mit der Stromanschlußklemme (C) und kathodenseitig mit dem Netzstromanschluß (B) verbunden ist,
3) die Stromanschlußklemme (C) ist über zumindest eine Diode (D4) mit dem Netzstromanschluß (A) verbunden, wobei die Diode (D4) anodenseitig mit der Stromanschlußklemme (C) und kathodenseitig mit dem Netzstromanschluß (A) verbunden ist,
4) die Stromanschlußklemme (D) ist über zumindest eine Diode (D3) mit dem Netzstromanschluß (A) verbunden, wobei die Diode (D3) anodenseitig mit dem Netzstromanschluß (A) und kathodenseitig mit der Stromanschlußklemme (D) verbunden ist,
5) der Stromanschlußklemme (C) ist eine die Entladung eines Kondensators steuernde Steuerschaltung (S1) zugeordnet, die wenigstens einen ersten Steuerschaltungsanschluß (E) und einen zweiten Steuerschaltungsanschluß (G) aufweist,
6) der Steuerschaltungsanschluß (E) ist mit der Stromanschlußklemme (C) verbunden,
7) der Steuerschaltungsanschluß (G) ist über zumindest einen Kondensator (C2), insbesondere Elektrolytkondensator (EC2) mit dem Netzstromanschluß (A) verbunden, wobei der Steuerschaltungsanschluß (G) mit einem Anschluß des Kondensators (C2) bzw. dem negativen Anschluß des Elektrolytkondensators (EC2) verbunden ist,
8) der Stromanschlußklemme (D) ist eine die Entladung eines Kondensators steuernde Steuerschaltung (S2) zugeordnet, die wenigstens einen ersten Steuerschaltungsanschluß (F) und einen zweiten Steuerschaltungsanschluß (H) aufweist,
9) der Steuerschaltungsanschluß (H) ist mit der Stromanschlußklemme (D) verbunden und
10) der Steuerschaltungsanschluß (F) ist über zumindest einen Kondensator (C1), insbesondere Elektrolytkondensator (EC1) mit dem Netzstromanschluß (A) verbunden, wobei der Steuerschaltungsanschluß (F) mit einem Anschluß des Kondensators (C1) bzw. dem positiven Anschluß des Elektrolytkondensators (EC1) verbunden ist.

2. Ansteuerung nach Anspruch 1, gekennzeichnet durch folgende Merkmale:
11) zwischen erstem Steuerschaltungsanschluß (E, F) und zweitem Steuerschaltungsanschluß (G ,H) ist jeweils ein einem Kondensator (C3, C4) in Reihe vorgeschalteter Widerstand (R5, R6) vorgesehen,
12) zwischen erstem Steuerschaltungsanschluß (E, F) und zweitem Steuerschaltungsanschluß (G, H) ist jeweils parallel zu dem entsprechenden Kondensator (C3, C4) und Widerstand (R5, R6) ein Thyristor (THY1, THY2) angeordnet, dessen Anode mit dem entsprechenden ersten Steuerschaltungsanschluß (E, F) verbunden ist, dessen Kathode mit dem entsprechenden zweiten Steuerschaltungsanschluß (G, H) verbunden ist und dessen Gate mit dem Verbindungspunkt zwischen dem entsprechenden Kondensator (C3, C4) und dem entsprechenden Widerstand (R5, R6) verbunden ist,
13) zwischen erstem Steuerschaltungsanschluß (E, F) und zweitem Steuerschaltungsanschluß (G, H) ist jeweils parallel zu dem entsprechenden Kondensator (C3, C4) und Widerstand (R5, R6) ein einer Diode (D5, D6) vorgeschalteter Widerstand (R2, R1) vorgesehen, wobei die Kathode der Diode (D5, D6) mit dem entsprechenden Steuerschaltungsanschluß (E, F) und die Anode der Diode (D5, D6) mit dem entsprechenden Widerstand (R1, R2) verbunden ist.

3. Ansteuerung nach Anspruch 2, dadurch gekennzeichnet, daß die Thyristoren (THY1, THY2) jeweils über eine Z-Diode (D11, D12) mit dem jeweiligen Verbindungspunkt zwischen dem entsprechenden Kondensator (C3, C4) und dem entsprechenden Widerstand (R5, R6) verbunden sind, wobei die Z-Diode (D11, D12) jeweils anodenseitig mit dem Gate des entsprechenden Thyristors (THY1, THY2) verbunden ist.

4. Ansteuerung nach Anspruch 3, dadurch gekennzeichnet, daß die Steuerschaltungen (S1, S2) jeweils eine Diode (D9, D10) aufweisen, deren Anode mit dem entsprechenden ersten Steuerschaltungsanschluß (E, F) und deren Kathode mit dem Verbindungspunkt zwischen der Anode des entsprechenden Thyristors (THY1, THY2) und dem entsprechenden Widerstand (R5, R6) verbunden ist.

5. Ansteuerung nach Anspruch 3 oder 4, dadurch gekennzeichnet, daß die Steuerschaltungen (S1, S2) jeweils eine dem entsprechenden Widerstand (R5, R6) parallel geschaltete Diode (D7, D8) aufweisen, die kathodenseitig mit der Anode des entsprechenden Thyristors (THY1, THY2) und anodenseitig mit der Kathode der entsprechenden Z-Diode (D11, D12) verbunden ist.

6. Ansteuerung nach einem der Ansprüche 3 bis 5, dadurch gekennzeichnet, daß jeweils zwischen dem Steuerschaltungsanschluß (G, H) und der Verbindung zwischen dem Gate des Thyristors (THY1, THY2) und der Anode der Z-Diode (D11, D12) jeweils ein Widerstand (R3, R4) angeordnet ist.

7. Ansteuerung nach Anspruch 1, dadurch gekennzeichnet, daß den Steuerschaltungen (S1, S2) jeweils eine Diode (D5, D6) parallel geschaltet ist, wobei jeweils die Anode der Diode (D5, D6) mit dem jeweiligen ersten Steuerschaltungsanschluß (E, F) und die Kathode der Diode (D5, D6) mit dem jeweiligen zweiten Steuerschaltungsanschluß (G, H) verbunden ist.

8. Ansteuerung nach Anspruch 7, dadurch gekennzeichnet, daß jeweils zwischen den Kathoden der Dioden (D5, D6) und dem zweiten Steuerschaltungsanschluß (G, H) ein Widerstand (R1, R2) angeordnet ist

9. Ansteuerung nach Anspruch 7 oder 8, gekennzeichnet durch folgende Merkmale:
14) zwischen erstem Steuerschaltungsanschluß (E, F) und zweitem Steuerschaltungsanschluß (G ,H) ist jeweils ein einem Kondensator (C3, C4) in Reihe vorgeschalteter Widerstand (R5, R6) vorgesehen und
15) zwischen erstem Steuerschaltungsanschluß (E, F) und zweitem Steuerschaltungsanschluß (G, H) ist jeweils parallel zu dem entsprechenden Kondensator (C3, C4) und Widerstand (R5, R6) ein Thyristor (THY1, THY2) angeordnet, dessen Anode mit dem entsprechenden ersten Steuerschaltungsanschluß (E, F) verbunden ist, dessen Kathode mit dem entsprechenden zweiten Steuerschaltungsanschluß (G, H) verbunden ist und dessen Gate mit dem Verbindungspunkt zwischen dem entsprechenden Kondensator (C3, C4) und dem entsprechenden Widerstand (R5, R6) verbunden ist.

10. Ansteuerung nach Anspruch 9, dadurch gekennzeichnet, daß die Thyristoren (THY1, THY2) jeweils über eine Z-Diode (D11, D12) mit dem jeweiligen Verbindungspunkt zwischen dem entsprechenden Kondensator (C3, C4) und dem entsprechenden Widerstand (R5, R6) verbunden sind, wobei die Z-Diode (D11, D12) jeweils anodenseitig mit dem Gate des entsprechenden Thyristors (THY1, THY2) verbunden ist.

11. Ansteuerung nach Anspruch 10, dadurch gekennzeichnet, daß die Steuerschaltungen (S1, S2) jeweils eine Diode (D9, D10) aufweisen, deren Anode mit dem entsprechenden ersten Steuerschaltungsanschluß (E, F) und deren Kathode mit dem Verbindungspunkt zwischen der Anode des entsprechenden Thyristors (THY1, THY2) und dem entsprechenden Widerstand (R5, R6) verbunden ist.

12. Ansteuerung nach Anspruch 10 oder 11, dadurch gekennzeichnet, daß die Steuerschaltungen (S1, S2) jeweils eine dem entsprechenden Widerstand (R5, R6) parallel geschaltete Diode (D7, D8) aufweisen, die kathodenseitig mit der Anode des entsprechenden Thyristors (THY1, THY2) und anodenseitig mit der Kathode der entsprechenden Z-Diode (D11, D12) verbunden ist.

13. Ansteuerung nach einem der Ansprüche 10 bis 12, dadurch gekennzeichnet, daß jeweils zwischen dem Steuerschaltungsanschluß (G, H) und der Verbindung zwischen dem Gate des Thyristors (THY1, THY2) und der Anode der Z-Diode (D11, D12) jeweils ein Widerstand (R3, R4) angeordnet ist.

14. Ansteuerung nach einem der Ansprüche 7 bis 13, gekennzeichnet durch die Kombination folgender Merkmale:
16) zwischen Kondensator (C1) bzw. Elektrolytkondensator (EC1) und Netzstromanschluß (A) ist ein mit einer Diode (D11) in Reihe geschalteter Kondensator (C5), insbesondere Elektrolytkondensator (EC5) vorgesehen, wobei die Diode (D11) anodenseitig mit dem Kondensator (C1) bzw. dem negativen Anschluß des Elektrolytkondensators (EC1) verbunden ist und der freie Anschluß des Kondensators (C5) bzw. der negative Anschluß des Elektrolytkondensators (EC5) an dem Netzstromanschluß (A) angeschlossen ist,
17) es ist eine Diode (D13) vorgesehen, die anodenseitig mit der Verbindung (P) zwischen der Kathode der Diode (D11) und dem Kondensator (C5) bzw. dem positiven Anschluß des Elektrolytkondensators (EC5) und kathodenseitig mit dem ersten Steuerschaltungsanschluß (F) verbunden ist,
18) es ist eine Diode (D15) vorgesehen, die anodenseitig mit dem Netzstromanschluß (A) und kathodenseitig mit der Verbindung (J) zwischen der Anode der Diode (D11) und dem Kondensator (C1) bzw. dem negativen Anschluß des Elektrolytkondensators (EC1) verbunden ist,
19) zwischen dem Kondensator (C2) bzw. dem negativen Anschluß des Elektrolytkondensators (EC2) und der Stromanschlußklemme (C) ist ein mit einer Diode (D12) in Reihe geschalteter Kondensator (C6), insbesondere Elektrolytkondensator (EC6) vorgesehen, wobei die Diode (D12) anodenseitig mit dem Kondensator (C2) bzw. dem negativen Anschluß des Elektrolytkondensators (EC2) verbunden ist und der freie Anschluß des Kondensators (C6) bzw. der negative Anschluß des Elektrolytkondensators (EC6) an die Stromanschlußklemme (C) angeschlossen ist,
20) es ist eine Diode (D14) vorgesehen, die anodenseitig mit der Verbindung (O) zwischen der Kathode der Diode (D12) und dem Kondensator (C6) bzw. dem positiven Anschluß des Elektrolytkondensators (EC6) und kathodenseitig mit dem ersten Steuerschaltungsanschluß (E) verbunden ist, und
21) es ist eine Diode (D16) vorgesehen, die anodenseitig mit der Stromanschlußklemme (C) und kathodenseitig mit der Verbindung (I) zwischen der Anode der Diode (D12) und dem Kondensator (C2) bzw. dem negativen Anschluß des Elektrolytkondensators (EC2) verbunden ist.

15. Ansteuerung nach Anspruch 14, dadurch gekennzeichnet, daß pro Steuerschaltung jeweils zumindest eine weitere Leistungsstufe vorgesehen ist, wobei jede Leistungsstufe durch die Kombination folgender Merkmale gekennzeichnet ist:
22) die Leistungsstufe besteht zumindest aus drei Dioden und einem Kondensator bzw. einem Elektrolytkondensator,
23) der Kondensator bzw. der Elektrolytkondensator und die erste Diode sind in Reihe zwischen den Kondensator der vorherigen Leistungsstufe und dem Netzstromanschluß (A) bzw. der Stromanschlußklemme (C) zwischengeschaltet, wobei die Anode der ersten Diode mit dem Kondensator bzw. dem negativen Anschluß des Elektrolytkondensators der vorherigen Leistungsstufe verbunden ist und der freie Anschluß des Kondensators bzw. der negative Anschluß des Elektrolytkondensators mit dem Netzstromanschluß (A) bzw. der Stromanschlußklemme (C) verbunden ist,
24) jeweils an der Verbindung (M, N) zwischen der Anode der ersten Diode und dem Kondensator bzw. der vorherigen Leistungsstufe ist die Kathode der zweiten Diode angeschlossen, deren Anode mit dem Netzstromanschluß (A) bzw. der Stromanschlußklemme (C) verbunden ist,
25) die dritte Diode ist kathodenseitig mit dem ersten Steuerschaltungsanschluß (E, F) verbunden und anodenseitig an die Verbindung (K, L) zwischen der Kathode der ersten Diode und dem Kondensator bzw. dem positiven Anschluß des Elektrolytkondensators der vorherigen Leistungsstufe angeschlossen.

16. Ansteuerung nach einem der Ansprüche 1, 7, 8 oder Anspruch 14 oder 15 in Kombination mit Anspruch 7 oder 8, dadurch gekennzeichnet, daß die Steuerschaltungen (S1, S2) MOSFet's aufweisen.

17. Ansteuerung nach einem der Ansprüche 1, 7, 8 oder Anspruch 14 oder 15 in Kombination mit Anspruch 7 oder 8, dadurch gekennzeichnet, daß die Steuerschaltungen (S1, S2) Bipolartransistoren aufweisen.

18. Ansteuerung nach einem der Ansprüche 1, 7, 8 oder Anspruch 14 oder 15 in Kombination mit Anspruch 7 oder 8, dadurch gekennzeichnet, daß die Steuerschaltungen (S1, S2) IGBT's aufweisen.

19. Ansteuerung nach einem der Ansprüche 1, 7, 8 oder Anspruch 14 oder 15 in Kombination mit Anspruch 7 oder 8, dadurch gekennzeichnet, daß die Steuerschaltungen (S1, S2) Triac's aufweisen.
